# EUROPEAN PATENT SPECIFICATION

(11) **EP 1 344 271 B1**
(45) Date of publication and mention of the grant of the patent: **06.01.2010**
(21) Application number: 01994519.5
(22) Date of filing: 09.11.2001
(51) Int. Cl.: H01M 4/86, H01M 4/88, H01M 4/90, H01M 8/10, H01M 8/12, H01M 8/18, H01M 8/04

(54) **THE USE OF SULFUR-CONTAINING FUELS FOR DIRECT OXIDATION FUEL CELLS**
VERWENDUNG VON SCHWEFELHALTIGEN BRENNSTOFFEN FÜR DIREKTOXIDATIONSBRENNSTOFFZELLEN
UTILISATION DE COMBUSTIBLES SOUFRES POUR PILES A COMBUSTIBLE A OXYDATION DIRECTE

(30) Priority: 09.11.2000 US 247444 P; 19.02.2001 US 269525 P; 27.07.2001 US 308313 P
(43) Date of publication of application: 17.09.2003
(73) Proprietor: The Trustees of The University of Pennsylvania, Philadelphia, Pennsylvania 19104-3147 (US)
(72) Inventor: GORTE, Raymond, J., Narberth, PA 19072 (US); VOHS, John, M., Newtown Square, PA 19073 (US)
(74) Representative: Harrison, Ivor Stanley
(86) International application number: PCT/US2001/051149
(87) International publication number: WO 2002/058169

(56) References cited:
- EP-A- 0 996 184
- WO-A1-00/52780
- US-A- 5 021 921
- US-A- 5 071 718
- US-A- 5 589 285
- US-A- 5 589 285
- US-A- 6 139 666
- US-B1- 6 251 533

## Description

### Field Of The Invention

This invention relates to fuel cell technology and more particularly to a solid oxide fuel cell capable of being operated with a sulfur-containing hydrocarbon fuel, as well as methods of fabrication of such fuel cells and their use for producing electric energy.

### Description of Prior Art

Solid-oxide fuel cells (SOFCs) have grown in recognition as a viable, high temperature source of electric energy. As the operating temperatures of these fuel cells typically exceed 600°C and may be as high as 1,000°C; the materials used for the cell components are limited to those that are stable at such temperatures. The electrolyte of the cells is made primarily from dense ceramic materials. The electrolyte conducts oxygen anions (O²⁻) but is an electronic insulator.

It is known to prepare anode materials for solid-oxide fuel cells using nickel (Ni) cermets prepared from NiO and yttria-stabilized zirconia (YSZ) powders. See N.Q. Minh, Journal of the American Ceramic Society, 76: 563 (1993). High-temperature calcination at greater than 1200°C is essential in order to obtain the necessary ionic conductivity in the YSZ portion of the anode.

In most conventional fuel cells, hydrogen gas is either fed directly to the anode or produced by steam reforming of hydrocarbons, such as methane. Steam reforming is costly and adds significant complexity to the system. It has been proposed to use dry methane; however, Ni catalyzes the formation of carbon fibers in dry methane, resulting in carbon formation on the anode. Ni-containing anodes can be used only if the fuel cells incorporating them are operated at steam/methane ratios greater than 1.7. However, there are significant advantages to be gained by operating under dry conditions. These include easier management of heat, no requirement of adding steam, and the possibility of lower operating temperatures due to the fact that equilibrium for direct oxidation is always favorable.

Some of the shortcomings of nickel-based anode materials in SOFCs have been overcome by the use of copper-containing anodes. *See,* for example, R Gorte et al., Advanced Materials, 12: 1465-69 (2000). It has been shown that replacement of nickel with copper in the anode material avoids the problem of carbon formation, when using dry hydrocarbon fuels. *See* S. Park, et al., Nature, 404: 265-57 (2000).

Fuel cells are normally operated with hydrogen as the fuel. It has been proposed to replace hydrogen with commercially available and more economical hydrocarbon fuels such as natural gas, gasoline, diesel fuel, naphtha, fuel oil and the like. Such raw fuels are not currently in use as a fuel source suitable for a fuel cell because these fuels contain relatively high levels of sulfur, often as naturally-occurring complex organic sulfur compounds. For example, gasoline sold in the United States has an average sulfur level of 300 ppm. Also, sulfur compounds such as mercaptans and thiols are added as odorants to natural gas at levels between 10 and 20 ppm so that leaks may be detected.

Most conventional fuel cells are operated on hydrogen gas. Oxidation in the presence of sulfur results in a poisoning effect on catalysts used in the hydrogen generation system, often including the fuel cell anode catalyst. Accordingly, the hydrocarbon fuels currently in use in fuel cells are routinely desulfurized and then reformed to hydrogen gas.

In one such operation, conventional fuel-processing systems used with stationary fuel cell power plants include a thermal steam reformer, such as that described in United States Patent No. 5,516,344. In such a fuel-processing system, sulfur is removed by conventional hydrodesulfurization techniques, which typically rely on a certain level of recycle as a source of hydrogen for the process. The recycle hydrogen combines with the organic sulfur compounds to form hydrogen sulfide within a catalytic bed. The hydrogen sulfide is then removed, using a zinc oxide bed to form zinc sulfide. The general hydrodesulfurization process is disclosed in detail in United States Patent No. 5,292,428. While this system can be used in large stationary applications, it adds significant complexity to the systems.

Other fuel-processing systems, such as conventional auto-thermal reformers, which have a higher operating temperature than conventional thermal steam reformers, can produce hydrogen-rich gas in the presence of the aforesaid complex organic sulfur compounds without prior desulfurization. According to United States Patent No. 6,159,256, when using an autothermal reformer to process raw fuels containing complex organic sulfur compounds, the result is a loss of autothermal reformer catalyst effectiveness and useful catalyst life of the remainder of the fuel-processing system. Before feeding the reformate to the fuel cell, it has been reported that the H₂S concentration must be decreased to 0.05 ppm. Y. Matsuzaki and I. Yasuda, "SOFC VII, Proceeding of the 7th Intern. Symp.," Electrochemical Society, Pennington, NJ, 2001:16 (2001), p.769.

Alternatively, sulphur, in the form of hydrogen sulphide, can be removed from the gas stream by passing the gas stream through a liquid scrubber, such as sodium hydroxide, potassium hydroxide or amines. Liquid scrubbers are large and heavy and are, therefore, useful principally only in stationary fuel cell power systems.

EP-A-0996184 describes an anode for a solid-oxide fuel cell formed from ceria impregnated with nickel, the anode also including an oxide of thorium, zirconium, magnesium or tungsten and either praseodymium or cobalt as catalyst.

WO00/52780 describes a method for preparation of an anode for a solid oxide fuel cell in which zircon fibres are mixed with yttria-stabilized zirconia powder, calcined and impregnated with copper or nickel. Ceria may be subsequently added.

### Summary of the Invention

It is an objective of this invention to overcome the problems associated with the presence of complex organic sulphur compounds in a hydrocarbon fuel stream for use in a fuel cell, without increasing fuel-processing complexity.

It is a further objective of this invention to provide a fuel cell that can operate with a sulphur-containing hydrocarbon fuel.

It is another objective of this invention to provide a fuel cell that can operate with fuel that does not have to undergo prior treatment to remove complex organic sulphur compounds.

It is yet a further objective of this invention to provide a process by which a fuel cell that is contaminated by sulfur can be restored to full performance after being deactivated by sulphur poisoning.

It is another objective of this invention to provide a method of fabricating a porous, direct-oxidation anode for a solid-oxide fuel cell starting from a nickel cermet.

It is another objective of this invention to provide a method for preparing a layered ceramic structure comprising a direct oxidation anode with a supported electrolyte, which may incorporate an additional layer to impart greater strength to the structure.

It is a further objective of this invention to provide a method for preparation of a porous copper or Ni-Cu alloy cermet for use as a porous direct-oxidation anode for a solid-oxide fuel cell.

It is yet another objective of this invention to provide a solid-oxide fuel cell, having a ceramic-metal alloy composite anode, which operates efficiently using a dry hydrocarbon fuel containing sulfur.

It is still another objective of the present invention to provide a process of producing electrical energy by means of the above-described SOFC.

These and other objectives are achieved according to the present invention, which is embodied in a solid oxide fuel cell comprising a solid electrolyte that is an electronic insulator which allows transfer of anions, a ceramic-metal composite anode and a cathode, and which operates using a fuel comprising a sulfur-containing hydrocarbon and having a sulfur content of from about 1 ppm to about 5000 ppm and an oxygen source, as defined in the appended claims.

The hydrocarbon may be a petroleum distillate selected from the group consisting of gasoline, diesel oil, naphtha, JP-4, JP-5, JP-8, kerosene, motor oil, natural gas, and fuel oil. Other preferred hydrocarbons and their derivatives are alcohols including ethanol and methanol and dry methane, butane, toluene and decane. Mixtures of hydrocarbons can also be used. The sulfur-containing fuels preferably have a sulfur concentration of from about 1 ppm to about 1000 ppm and more preferably a sulfur concentration of from about 1 ppm to about 500 ppm.

The invention also provides a process of producing electrical energy. The process of the invention comprises providing a solid oxide fuel cell comprising a solid electrolyte that is an electronic insulator which allows transfer of anions, a ceramic-metal composite anode and a cathode, and the furtner steps of contacting the fuel cell cathode with an oxygen source and contacting the anode with a fuel comprising a sulfur-containing hydrocarbon having a sulfur content of about 10 ppm to about 5000 ppm.

The present invention also provides a solid-oxide fuel cell comprising a solid electrolyte comprised of an electrical insulator which allows transfer of anions, an anode and a cathode. The anode material, with or without supported electrolyte, is prepared using the methods described above.

The present invention additionally provides a process of producing electrical energy. This process comprises the steps of providing the solid-oxide fuel cell described immediately **above,** contacting the cathode of that fuel cell with an oxygen source and contacting the anode of that fuel cell with a fuel.

### Brief Description of the Drawings

- **FIGURE 1**: is a diagrammatic illustration of the operation of a solid-oxide fuel cell of the invention.
- **FIGURE 2**: is a diagrammatic illustration of a fuel cell which is suitable for use in practicing the present invention.

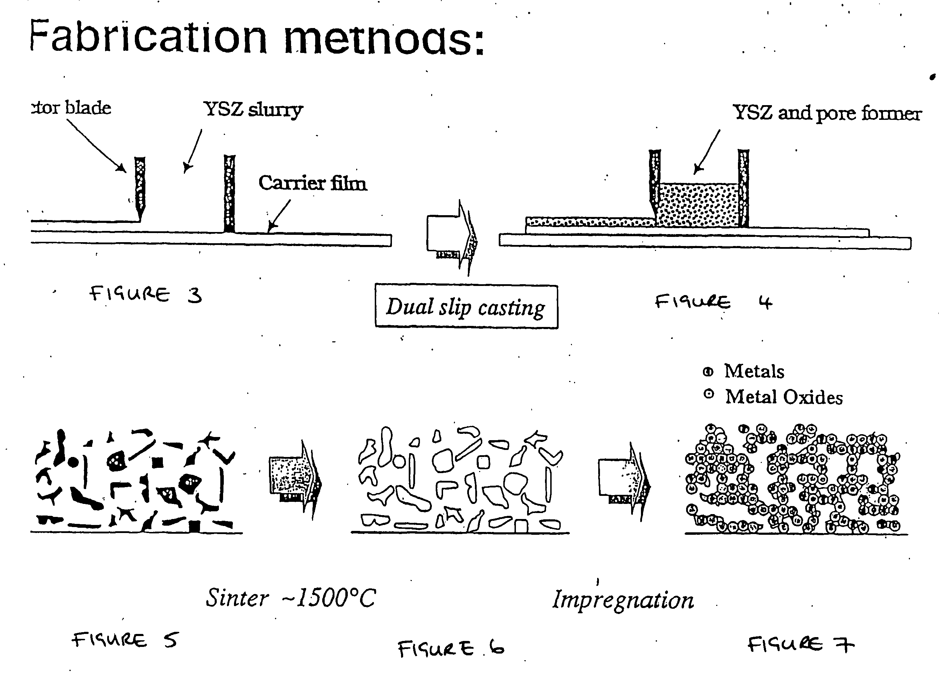

- **FIGURES 3, 4, 5, 6 AND 7**: provide a diagrammatic illustration of the preferred method of fabricating an anode of the invention.
- **FIGURE** 8: is a diagrammatic illustration of the process for fabricating in accordance with this invention.
- **FIGURE 9**: is a photograph of the three green tapes used to make the reinforced, direct-oxidation anode with supported electrolyte, along with the post- fired structure.
- **FIGURE 10**: is a diagrammatic side view illustration of components of a sold-oxide fuel cell.
- **FIGURE 11**: depicts voltage and current density results obtained with the fuel cell of the invention using sulfur-free decane, toluene and diesel oil as fuel.
- **FIGURE 12**: depicts the voltage and current density produced from the cell of the type shown in FIGURE using n-decane containing different concentrations of sulfur.
- **FIGURE 13**: depicts the maximum current density of a fuel cell operated with 40 wt% n-decane containing 5000 ppm sulfur in dry nitrogen in a fuel cell having a ceria-free copper-yttria stabilized zirconium anode.
- **FIGURE 14**: depicts the voltage and current density of a fuel cell having an anode with a copper-ceria-ytttia stabilized zirconia anode and operated with 40 wt% n-decane containing 5000 ppm sulfur in nitrogen gas.

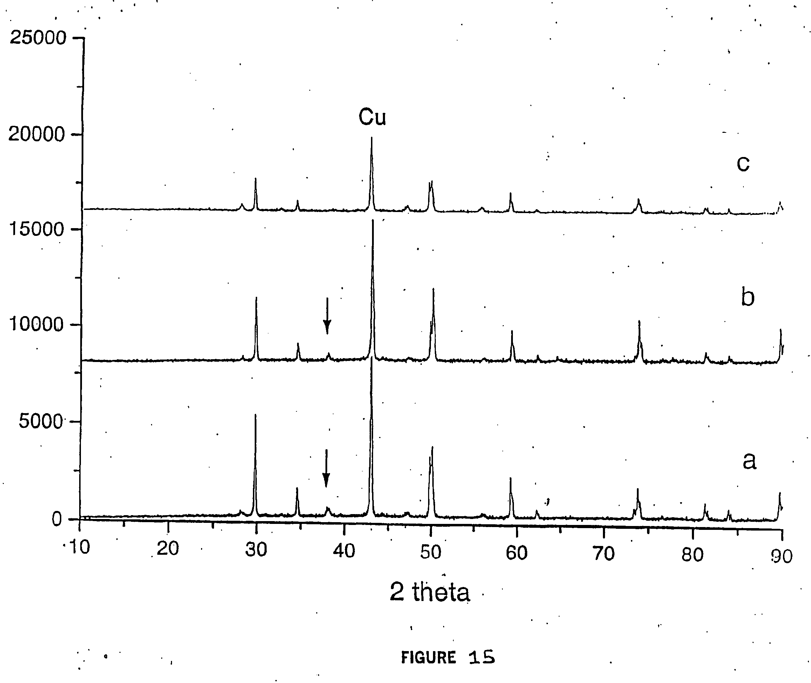

- **FIGURE 15**: depicts x-ray diffraction results for a copper-ceria-yttria stabilized zirconium anode after various treatment conditions.
- **FIGURE 16**: depicts voltage and current density results for the fuel cell operated with 40% commercial gasoline in dry nitrogen gas.
- **FIGURE 17**: depicts voltage and current density results for the fuel cell operated with 10% commercial gasoline in dry nitrogen. '
- **FIGURE 18**: depicts voltage and current density results for the fuel cell operated with decane containing different concentrations of sulfur.
- **FIGURE 19**: depicts the change in resistance of the Cu-formed anode in a hydrocarbon fuel containing 5000 ppm sulfur as that conductor is heated to 700°C.
- **FIGURE 20**: is a graphical representation of fuel-cell performance as compared to current density curves for the operation of the solid-oxide fuel cell of the invention at 700 °C using hydrogen and butane as the fuels. Hydrogen is represented in the curves by a circle and butane by a square. The light circle and square denote results relating to cell voltage. The bold circle and square denote results relating to power density.

### Description of Preferred Embodiments

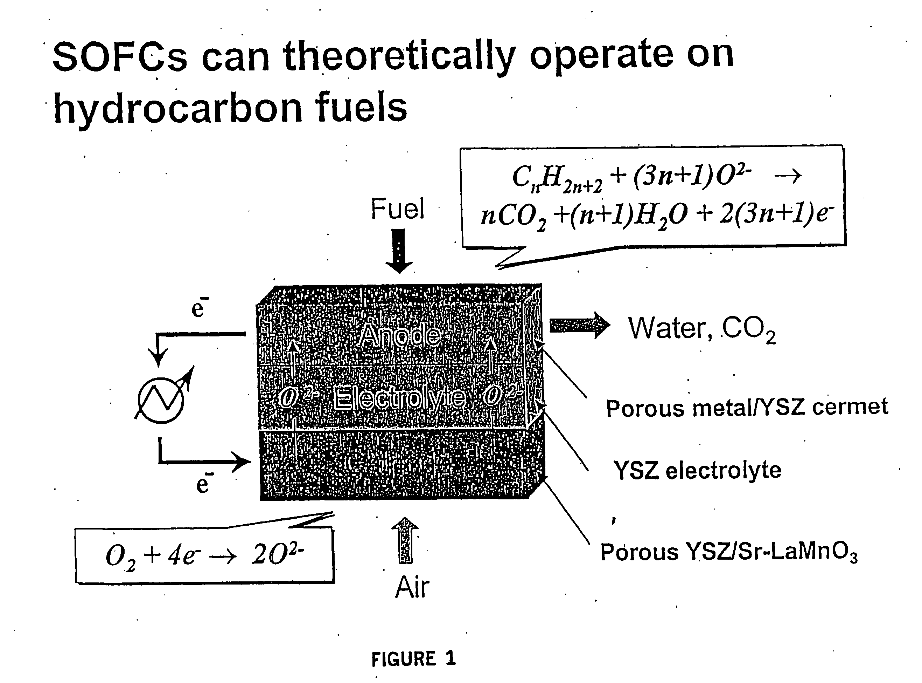

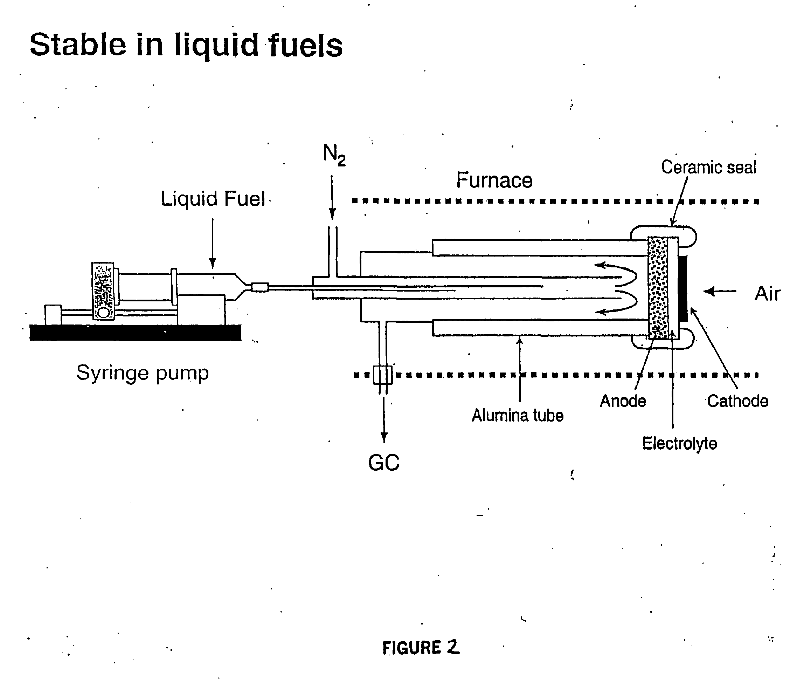

**FIGURES 1** and **2** are, respectively, diagrammatic representations of the operation of a solid oxide fuel cell and the operation of a fuel cell of the invention. According to FIGURES 1 and 2, molecular O₂ from an oxygen source is reduced to O²⁻ anions at the cathode, after which the O²⁻ diffuses through the electrolyte to the anode, where it oxidizes the fuel, in this case, a hydrocarbon fuel. The external current is produced by the flow of electrons from the anode through an external circuit to the cathode. Water and carbon dioxide are also produced by the oxidation reaction at the anode, and are removed from the fuel cell.

The electrolyte is an electronic insulator which allows transfer of ions. The electrolyte is preferably an oxide ion conducting material. Suitable oxide ion conducting materials include doped ceria such as gadolinium-doped ceria, samarium-doped ceria, doped zirconia such as scandium-doped zirconia, yttria-doped zirconia and calcium-doped zirconia and doped lanthanum gallate such as strontium-doped lanthanum gallinum oxide. Other suitable oxide ion conducting materials are bismuth oxides or vanadates, perovskites containing maganese, cobalt, iron, nickel, vanadium, chromium or other metals. Preferably the electronic insulator is a doped ceria or doped zirconia and is most preferably yttrium-stabilized zirconia. *See,* for example, United States Patent Nos. 6,214,485 to Barnett et al., and 6,303,098 to Kramarz et al., and United States Patent No. 5,670,270 to Wallin.

The anode/electrolyte structure of the fuel cell of the invention may be prepared by any suitable method, some of which are exemplified directly below. For example, the unsintered mixture of electronically-conductive and ionically conductive materials may be deposited on a layer comprising a sintered or unsintered ionically-conductive electrolyte material prior to being sintered, to ensure sufficient contact between the layers, as illustrated in the process of the second aspect of the invention. In one embodiment of such a process, the mixture of ionically conductive and electronically-conductive materials is deposited on an unsintered layer of electrolyte material and the mixture and electrolyte layer are sintered simultaneously. In another embodiment, the mixture is deposited on a previously sintered layer of electrolyte, and then sintered.

The mixture of ionically-conductive and electronically-conductive particles may be applied to the layer comprising particles of an electrolyte material (hereafter "electrolyte layer"), by any suitable means such as, for example, tape casting methods, screen-printing or silk-screening a slurry of the material(s) onto the electrolyte structure.

Other means of forming the electrode/electrolyte structure are tape calendering and slip casting. Tape calendering generally includes the steps of forming an electronically conductive tape from an electronically conductive component as well as forming an electrolyte tape from an electrolyte component. The tapes are then rolled together to form a multilayer composite tape. In slip casting, a slurry of a conductive ceramic material and a liquid vehicle such as water, optionally with an organic binder and surfactants is cast into a mold to provide the desired shaped article. The specific amounts of ceramic material, organic binder and liquid vehicle can be varied depending on the density desired m the cast product The resulting cast product is dried and fired by conventional means to produce the desired electrode. *See also,* for example, United States Patent Nos. 6,270,536 to Minh, and 5,670,270 to Wallin.

In a preferred embodiment of this invention, the ceramic-metal composite anode of the fuel cell is preferably prepared as illustrated in FIGURE 2A, 2B, 2C, 2D and 2E. In this method, yttria-stabilized zirconium (YSZ) powder is mixed with a polymer and spread onto a suitable film material, e.g., Molar®, to form a green tape. Next, a similar polymer-YSZ slurry is mixed with a pore former and applied to the exposed surface of the first tape, which contains no pore former. The cast tapes are then co-sintered to form a porous layer consisting essentially of porous YSZ on a generally planar sheet of relatively dense YSZ. The pore former, e.g., carbon particles, is consumed during the sintering step and substantially none remains in the resulting porous YSZ layer.

Thereafter, copper is incorporated into the anode material by aqueous impregnation using a concentrated salt solution, e.g., Cu(NO₃)₂, followed by calcination to a temperature on the order of 600°C for a period of about two hours, which decomposes the nitrates and forms oxides. Reduction of the copper oxide yields the elemental form of copper. The resulting material has sufficient mechanical strength for anode-supported electrolytes.

The metal content of the anode material is at least 10%, preferably 25%, and more preferably at least 35% by weight.

Copper is the preferred metal for use in the anode, but the metal may be an alloy such as copper with a second conductive metal. The alloy contains between about 5% and about 95% by weight copper, and about 5% to about 95% by weight of the second metal, and more preferably between about 50% and about 90% by weight copper and about 10% to about 50% by weight of the second metal. One hundred percent (100%) Cu is preferred.

Other components including ceria oxide (CeO₂), are preferably added using the same impregnation methods. CeO₂ plays a dual role in the anode. First, it provides ionic and electronic conductivity, thereby increasing the reaction zone created where the gas phase, the ionic conductor and the electronic conductor come together, which is commonly referred to as the three-phase boundary or TPB. Secondly, CeO₂ provides catalytic activity for the oxidation of hydrocarbons.

The term "consisting essentially of yttria-stabilized zirconia," as used herein in reference to the porous layer of the ceramic-metal composite anode, is intended to signify the substantial absence from such layer of any fibrous component whose function is to impart porosity to the layer by becoming a component of the finished anode material (in contrast to pore formers that are consumed during sintering), and, in particular, to the absence of zircon fibers and the like which, due to siliceous surface coating, have a detrimental effect on SOFC performance.

The term "oxygen source," as used herein, refers to air and oxygen in more purified form than present in air.

The term "fuel," as used herein, refers to hydrogen and any hydrocarbon fuel, wherein hydrocarbon is defined as any flammable compound that consists of, or includes as primary elements, hydrogen, carbon and oxygen.

As noted above, conventional fuel cells have used hydrogen as fuel. The solid oxide fuel cells of the invention are intended to be operated with a wide variety of hydrocarbon fuels, including mixtures of these fuels. Sulfur-containing hydrocarbons can also be used. These include, without limitation, petroleum distillates such as gasoline, diesel oil, naphtha, JP-4, JP-5, JP-8, kerosene, motor oil, natural gas and fuel oil. Other preferred hydrocarbons and derivatives are alcohols, including ethanol and methanol, and dry methane, butane, toluene and decane. The fuel cell of the invention is normally operated at about 650 - 900 °C.

The fuel cell of the invention can operate successfully with hydrocarbons containing between 1 ppm and 5000 ppm sulfur. As demonstrated herebelow, the fuel cell of the invention is operated successfully with hydrocarbons containing between 250 ppm and 5000 ppm sulfur including 500 ppm and 1000 ppm sulfur. It is preferred to use as fuel hydrocarbons containing from 1 ppm to 21000 ppm sulfur and more preferably from 1 ppm to 500 ppm sulfur. Commercial gasoline is a suitable fuel. Depending upon state regulations and other requirements, commercial gasoline typically has about 300 ppm sulfur but may have, for example, sulfur concentrations of less than about 10 ppm, about 10 ppm, about 20 ppm, or about 100 ppm.

As noted above, the efficiency of the fuel cell does not appear to be noticeably affected by the use of hydrocarbons with sulfur concentrations below 1000 ppm for a process such as a cyclic process, in which the fuel cell is operated for ten (10) hours or less. For a process involving continuous use of the fuel cell for one hundred (100) hours or more, the efficiency of the fuel cell does not appear to be noticeably affected by the use of hydrocarbons with sulfur concentrations below 100 ppm. In the event that the fuel cell becomes deactivated by sulfur poisoning, the performance of the cell can be restored by heating the anode in steam. In a preferred embodiment, this heating process is carried out in a mixture of steam and a dilutant, preferably N₂ or CO₂, Preferred ratios of steam to CO₂ are between 100:0 and 5:95. The anode is preferably heated for reactivation at a temperature of between about 600°C and about 800°C, and preferably at about 700°C for a period of one (1) to five (5) hours, and most preferably, for about one (1) hour to about three (3) hours.

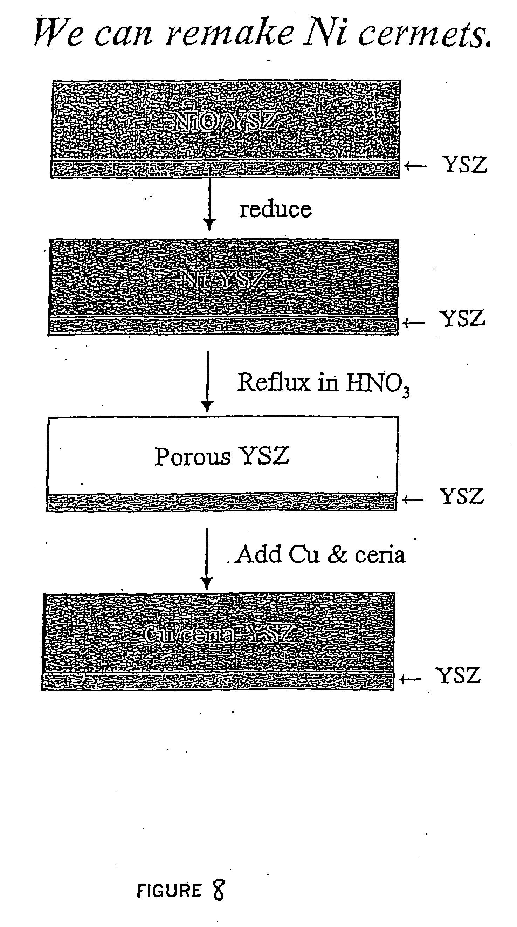

In accordance with a preferred feature of the invention shown diagrammatically in **FIGURE 8**, the starting material is a nickel cermet (Ni and YSZ composite, containing at least 10% Ni so as to provide electronic conductivity) prepared by any known technique. *See,* for example, N.Q. Minh, Journal of the American Ceramic Society: 76: 563 (1993). The reduction of NO to elemental nickel imparts a porous character to the cermet The cermet is contacted with a leaching agent to remove at least a portion of the nickel, thereby increasing the porosity of the cermet The porous cermet is next contacted with a copper-containing impregnant. The porous copper-containing cermet is then further treated to form a porous copper cermet or copper-nickel alloy cermet (depending on the amount of nickel removed during leaching), which is used as the direct-oxidation anode material for a solid-oxide fuel cell.

In the preferred embodiment referenced above, the ceramic powder of the first tape casting formulation comprises a ceramic powder containing NiO and YSZ, a binder and water as the carrier, so as to form a slurry. The backing sheet is preferably a Mylar® cellulose acetate film. The first tape casting formulation also preferably includes glycerol as a plasticizer and a pore former. The slurry of the first tape casting formulation is applied to a ' supporting substrate and formed into a first tape.

Then a second tape casting formulation is prepared in the form of a slurry comprising a binder, a carrier medium and a YSZ powder. The second tape casting formulation does not contain any ingredient functioning as a pore former. The slurry of the second tape casting formulation is applied to a supporting substrate and formed into a second tape. The first tape may conveniently serve as the supporting substrate for the second tape, or a separate backing material can be used, if desired. In either case, the tapes are superposed one on the other to form an assemblage, and after sintering, the first tape is converted to the direct-oxidation anode, whereas the second tape becomes the supported electrolyte.

The amount of water used in the tape casting slurry is preferably about 20-40 wt. % based on the total weight of the composition. The formulations may additionally contain minor amounts of known processing expedients such as dispersants and defoaming agents. The amount of dispersant and defoaming agent may comprise about 1-5 wt. % and 0.05-0.5 wt. %, respectively, based upon the weight of the ceramic powder.

In a preferred embodiment, the first tape casting formulation also contains in addition to NiO another pore-forming agent. It is preferred that the other pore-forming agent is an organic material. A particularly preferred pore-forming agent is powdered graphite.

The multi-layer tape is typically removed from the backing sheet to allow the tape to be sintered to form a ceramic article. Removal of the backing sheet may be optional if the sheet is readily decomposed during sintering.

The casting may be performed by any known tape-casting technique. The preferred method of casting is a conventional doctor blade tape casting, comprising the following steps. First, the slurry is poured onto a backing sheet which is typically supported by a flat plate. The backing sheet and slurry are then passed under a doctor blade set at a height above the sheet corresponding to the desired tape thickness. The resulting tape is then dried to increase its strength and decrease tackiness. The binder sets during casting and drying as it cools to room temperature, The dried tape preferably has a thickness of about 25-2,500 µm:

In this preferred embodiment, the time and temperature of sintering of the multi-layer assemblage, or laminate preform, may vary, but it is preferably carried out at 1,500°C for two hours. The sintering step will consume all or part of any organic pore-forming agent, resulting in the first tape being porous.

After completion of the sintering step, the NiO will be reduced to elemental nickel as shown in **FIGURES 8**. Typically, this step is effected by reduction in hydrogen gas at a temperature above 500°C. Then at least part of the elemental nickel is leached from the assemblage. The preferred method of carrying out this step is contacting the assemblage with hot nitric acid, which selectively dissolves nickel with no appreciable dissolution of YSZ. The nitric acid can be replaced, if desired, by another leaching agent that selectively dissolves nickel. Preferably, all of the nickel is leached. In another preferred embodiment, about 50% to 99% of the nickel is leached. The removal of the nickel results in an increase in the porosity of the first tape.

After completion of the leaching step, the assemblage is impregnated with a copper-containing impregnant, preferably Cu(NO₂)₂. The amount of this material is preferably selected so as to yield an amount of elemental copper that is approximately equivalent to the weight of elemental nickel leached in the leaching step. The material is converted to copper oxide by calcination at a temperature of at least 600°C. The copper oxide is then reduced to elemental copper, generally by reduction in hydrogen gas at a temperature about 500 °C, thereby producing the direct-oxidation anode.

The copper content of the anode material is at least 15%, preferably 25%, and more preferably at least 35% by weight. In the embodiment of the invention in which the metal is copper-nickel alloy, the alloy preferably contains between about 5% and about 95% by weight copper and about 5% to about 95% by weight nickel.

Other components, including CeO₂, can be added to the anode portion of the assemblage using the same impregnation method described above. CeO₂ plays a dual role in the anode. First, it provides ionic and electronic conductivity, thereby increasing the reaction zone created where the gas phase, the ionic conductor and the electronic conductor come together, which is commonly referred to as the three-phase boundary, or TPB. Secondly, CeO₂ provides catalytic activity for the oxidation of hydrocarbons.

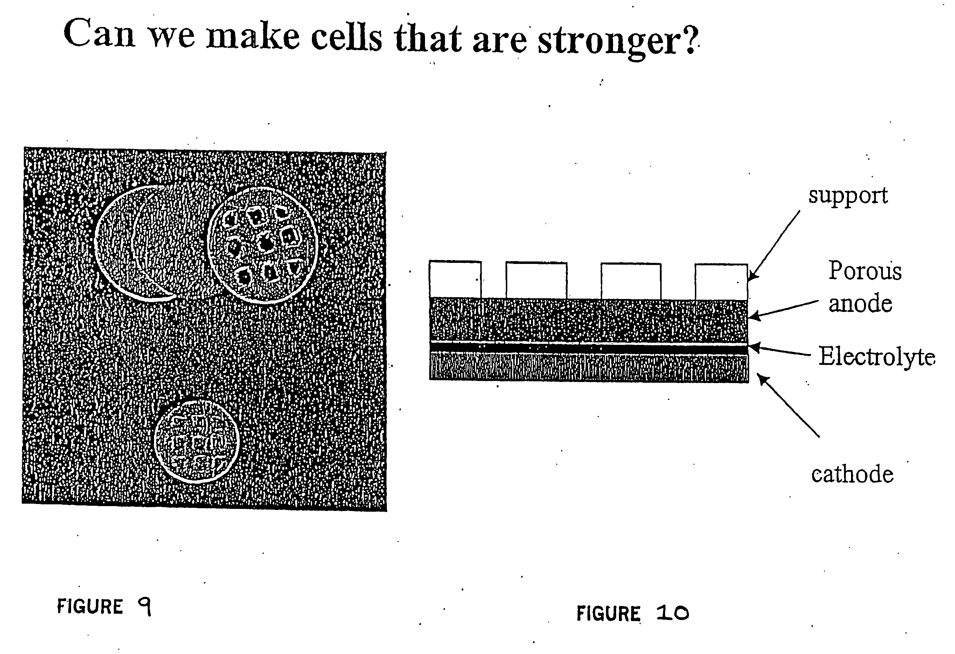

The method of preparing a two-layer laminate preform can be modified by incorporating a third tape in the assemblage to serve as a reinforcing layer in the finished structure, as shown in FIGURES 9, and 10. According to this method, the third tape casting formulation is prepared in the form of a slurry comprising a binder, a carrier and a ceramic powder, but no pore former. The ceramic powder may comprise YSZ as before or another material such as MgAlO₂, which has a coefficient of thermal expansion that is compatible with that of sintered YSZ. The thickness of the third tape is made relatively greater than the thickness of the second tape. The third tape is perforated to form at least one aperture through the thickness of the tape to allow passage of gas and liquid (e. g., copper salt solution) through the tape. The perforation preferably has a periphery with a continuously curved outline, i.e., no sharp angles that would promote cracking or fracturing of the material. The perforated third tape is superimposed on the laminated preform in contact with the porous, first tape.

The resulting cell is then heated to sinter the ceramic powder at 1,500°C for several hours. Any NO in the middle layer is then removed by reducing it to Ni and removing it by leaching. Compared with the porous direct-oxidation anode in the two-layer assemblage referenced above, with the addition of this reinforcing layer the three-layer assemblage has greater mechanical integrity.

After the three-layer assemblage is sintered, the cell can undergo the further steps described above in connection with the two-layer assemblage to incorporate therein as a metal conductor, a copper or copper-nickel alloy, as well as CeO₂. The layers of this assemblage are shown as **FIGURE 9** along with the post-fired laminate structure. A finished fuel cell (prior to addition of Cu) embodying this aspect of the present invention is shown in FIGURE 10. In the preferred embodiment, the electrolyte layer is < 100µm thick, the porous layer is between about 100 µm and about 1000 µm, and the support is between about 300 µm and about 5,000 µm.

In a solid-oxide fuel cell, the anode must catalyze the reaction of the hydrocarbon fuel with O²⁻ from the electrolyte. Because elections are produced in this reaction, the anode must be electrically conductive. Finally, the anode must have a coefficient of thermal expansion approximating that of the dense YSZ electrolyte to minimize cracking. The copper or copper-nickel anode provides the electrical conductivity or interconnection required of the anode. The copper acts also as an electronic or current collector for the electrons produced during the catalyst reaction of the fuel with O²⁻.

A copper current collector and interconnect in a solid-oxide fuel cell anode would have a variety of forms including, but not limited to, meshes, gauzes, wires, plates (both flat and with ridges or protrusions), tubes, and other structured and pre-formed shapes.

In addition to using current collectors and interconnects that are pure Cu and copper-nickel alloys, other Cu-coated metals may be used. For example, stainless steel will have better mechanical properties than Cu at high temperatures. One method for taking advantage of the mechanical properties of stainless steel or other metals, while maintaining the inert chemical properties of Cu, is to plate Cu onto the structural metal. For these systems, the surface reactivity of the metal is passivated or eliminated via coating with the unreactive Cu. Cu coating allows for the use of a variety of metals in addition to Ni, including, without limitation, Fe, W and metal alloys, such as but not limited to ferritic steels (e.g., FeCrAl alloys), nickel alloys (e.g., Inconel 617) and Cr alloys (e.g., Cr₅FeY₂O₃) as current collectors and interconnects in SOFCs that run on dry hydrocarbons. In addition to the enhanced thermal stability of Cu-coated metals, the use of Cu-coated metals and alloys has the added advantage of decreased cost. Cu-coated metals and alloys that are used as current collectors and interconnects could have a wide variety of shapes such as those mentioned above for pure Cu.

The invention can be used in all SOFCs, for portable generators and for use, for example, in automobiles, ship propulsion and electric power generation.

The following EXAMPLES are provided merely to illustrate, not to limit the invention.

### EXAMPLE 1

A solid-oxide fuel cell having a porous ceramic-copper composite anode was prepared by the dual tape casting technique described hereinabove, which is set forth in additional detail in R. Gorte et al., Advanced Materials, 12:1465-69 (2000).

### EXAMPLE 2

A solid-oxide fuel cell was prepared according to the present invention, as follows. A tape of YSZ powders, polymer binder, and a carbon powder pore former was spread onto one surface of a YSZ tape without pore formers and calcined at 1,500°C for two hours. The cathode was formed from a 50 wt. % physical mixture of Sr-LaMnO₃ and YSZ powder, pasted onto the opposite surface of the densified electrolyte in a glycerol slurry and then heated at 1,250°C for two hours. Thereafter, the porous YSZ layer was impregnated with an aqueous solution of Cu(NO₃)₂ (Fisher Scientific) and Ce₂ (NO₃)₃. After calcination at 950°C for two hours, the copper salt was converted to the metallic form by heating to 800°C in H₂.

### EXAMPLE 3 (COMPARATIVE TEST)

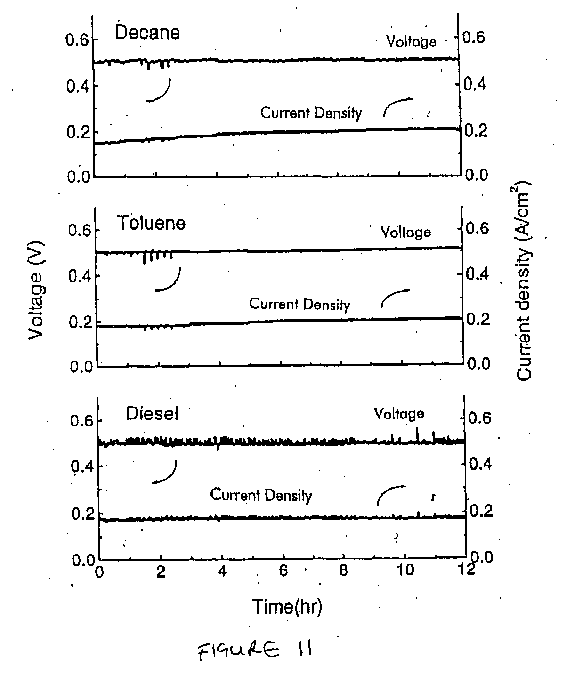

The solid oxide fuel cells of EXAMPLES 1 and 2 were tested to evaluate their performance using sulfur-free hydrocarbon as the fuel. The fuel cell of EXAMPLE 1 was operated with 40 wt% hydrocarbon in dry nitrogen at 700°C and the electric values of voltage, current density and power density were measured as a function of time. The hydrocarbons employed were decane, toluene and diesel fuel. The results, as shown in **FIGURE 11** are typical results obtained for such tests.

### EXAMPLE 4

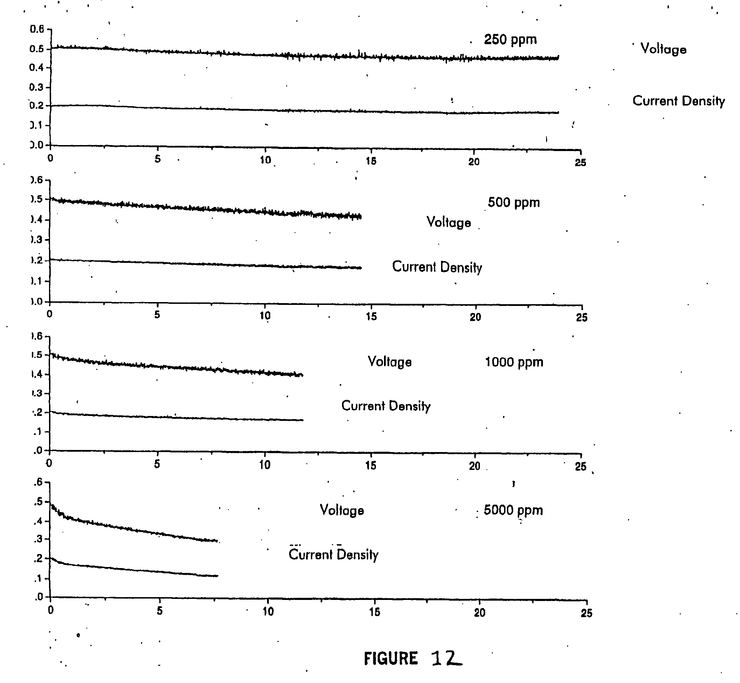

In order to test the sensitivity of the anodes to sulfur, fuels containing various levels of sulfur were prepared by mixing thiophene with n-decane to achieve sulfur concentrations (wt% sulfur) in the n-decane of 250 ppm, 500 ppm, 1000 ppm and 5000 ppm. The n-decane/thiophene fuel mixture was used as fuel in a fuel cell under conditions set forth above in EXAMPLES 1 and 2. The concentration of the n-decane/thiophene fuel mixture was 40 wt% with dry nitrogen gas making up the rest of the fuel. The results for voltage and current density measured over time for the n-decane/thiophene fuel mixtures with these various concentrations of sulfur is shown in **FIGURE 12** .These results indicate a very slight decline in performance for the n-decane/thiophene fuel with 250 ppm. **FIGURE 12** also indicates that the n-decane/thiophene fuel showed somewhat greater decrease in performance with increasing concentrations of sulfur. This result is consistent with FIGURE 11 which indicates no change in performance over time with the use of n-decane that is sulfur-free. **FIGURE 12** demonstrates that the use of a hydrocarbon fuel comprising n-decane with a sulfur concentration of 250 ppm (prepared by adding thiophene) results in only very slight decreases in performance after twenty-four (24) **FIGURE 12** hours further demonstrates that the use of a hydrocarbon fuel with 1000 ppm sulfur produced a slightly higher rate of decrease in fuel cell performance, but that the fuel cell still operated close to its original capacity for over ten (10) hours. This result demonstrates that the fuel cell can be operated very effectively with hydrocarbons containing at least 1000 ppm sulfur and is operable even when the hydrocarbon fuel contains up to 5000 ppm sulfur.

### EXAMPLE 5

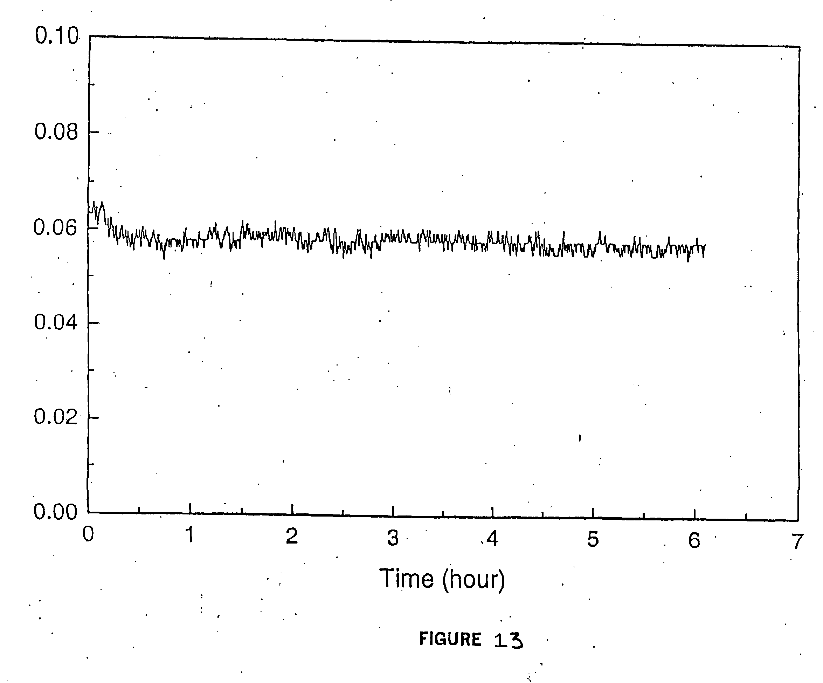

The test procedures used in **EXAMPLE 4** were repeated with the exception that the fuel cell comprised a ceria-free copper-yttria stabilized zirconia anode. The fuel employed was n-decane with 5000 ppm sulfur (prepared by the addition of thiophene). The fuel cell was operated with the cell shorted (i.e., at the maximum current). Cell current density was measured over time, and the results are shown in **FIGURE 13 FIGURE 13** indicates that the current density was unaffected by the high sulfur levels, even after six (6) hours. The open circuit voltage (0.9 Volts) (not shown) was also unaffected. Visual inspection of the anode suggested that the sulfur had no effect on the copper. This inspection, combined with the data set forth in **FIGURE** 13, further indicates that the use of hydrocarbon fuel containing very high levels *(i.e.,* 5000 ppm) of sulfur has no effect on the Cu component or on the performance of a cell containing an anode in which copper is used for electrical conductivity. The overall performance of a fuel cell which contains Cu but not ceria, however, was not good, indicating that the inclusion of ceria in the anode enhances performance.

### EXAMPLE 6

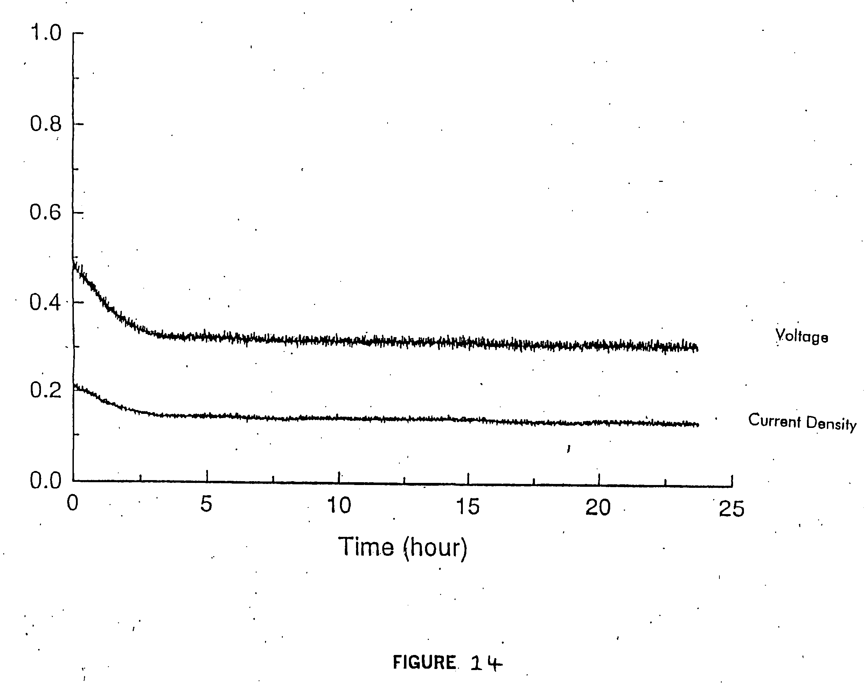

The test conditions referenced in **EXAMPLE 4** were repeated except that the fuel cell employed comprised a copper-yttria stabilized zirconia with ceria. The fuel used was again n-decane with the addition of thiophene to produce a sulfur concentration of 5000 ppm. The cell was operated for 24 hours. The results are shown in **FIGURE 14 FIGURE 14** indicates that the performance data is similar to earlier results set forth in **EXAMPLE 4**. **FIGURE 12** indicates that fuel cell performance falls over the first five (5) hours but then reaches a steady state. This result is believed to be due to the formation after about five (5) hours of a Ce₂O₂S phase.

Without wishing to be bound by a particular scientific theory, the results set forth in **EXAMPLES 5** and 6 are believed to have occurred for the following reasons. In order to understand the long-term effect of sulfur and whether the Cu-ceria anode will be stable in sulfur-containing environments, it is important to understand the mechanism for sulfur poisoning. At 700°C, the equilibrium constant for the reaction 2Cu + H₂S = H₂ + Cu₂S is 1500. This implies that Cu will remain metallic in a mixtures of H₂ and H₂S so long as the ratio of H₂:H₂S remains greater than 1500. While the equilibrium conditions for thiophene in hydrocarbons will be somewhat different from this, the equilibrium conditions suggest that Cu should be stable to sulfur poisoning until very high sulfur levels are produced.

Equilibrium data for the reaction 2CeO₂ + H₂S + H₂ = Ce₂O₂S + 2H₂O, the reaction most likely to lead to poisoning of the CeO₂ catalyst, are given in D. Alan, R. kay, W.G. Wilson and V. Jalan, Journal of Alloys and Compounds, 1993, 192. The stability of the Ce₂O₂S phase depends on both oxygen chemical potential as well as the sulfur chemical potential. For the typical conditions of fuel-cell anode, where the oxygen chemical potential is approximately 10⁻²⁰ to 10⁻¹⁰ atmospheres, the equilibrium data suggests that the Ce₂O₂S phase will form if the chemical potential of H₂S is above 10⁻³ to 10⁻⁴ atm.

### EXAMPLE 7

The fuel cell with a copper-ceria-yttria stabilized zirconia was prepared and operated according to **EXAMPLE 4** with the following additional test conditions. In a first test, the fuel cell was operated with a hydrocarbon fuel containing 250 ppm sulfur for twenty-four (24) hours, then operated with a hydrocarbon fuel containing 500 ppm sulfur for fourteen (14) hours, then operated with a hydrocarbon fuel containing 1000 ppm sulfur for twelve (12) hours and finally operated with a hydrocarbon fuel containing 5000 ppm sulfur for eight (8) hours. In the second test, the cell was operated with a hydrocarbon fuel containing 5000 ppm sulfur for seven (7) hours. In the third test, the fuel cell was operated with hydrocarbon fuel containing 500 ppm sulfur for twenty (20) hours. The copper-ceria-ytaia stabilized zirconia anode of the cell was subjected to x-ray diffraction measurements after completion of each of these three tests, and the results are shown in **FIGURE 9** by lines under the letters "a-c." The diffraction data represented by "a" suggest that a new phase of ceria with a diffraction peak near 39° is formed at high levels of sulfur. The diffraction data from the third test (represented by "c") further indicate that moderate levels of sulfur do not lead to the formation of this new sulfided phase as a result of the presence of sulfur-containing species. In all three measurements, the peak at about 43° due to the metallic copper phase is clearly visible. This result is consistent with the results in **EXAMPLE 6**, which tend to show that the sulfur had no effect on the copper.

### EXAMPLE 8

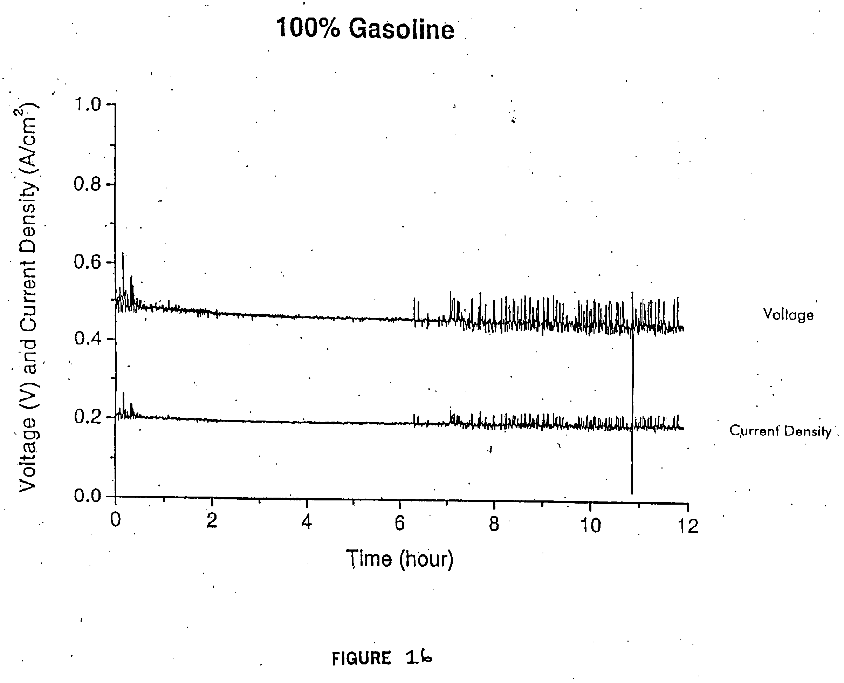

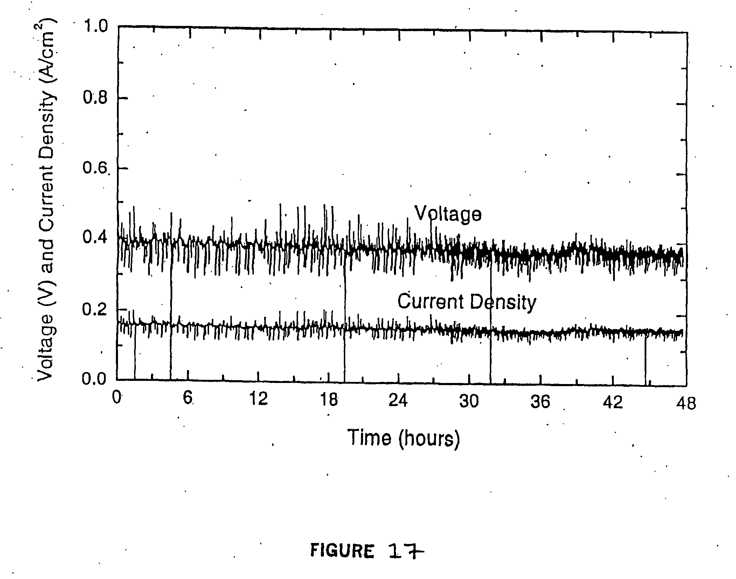

The fuel cells of EXAMPLES 1 and 2 were tested under conditions set forth in **EXAMPLE 4** with commercial gasoline used as the fuel. The fuel was 40 wt% gasoline in dry nitrogen gas. The results are shown in FIGURE 16. FIGURE 16 indicates that voltage and current density of the cell are stable over twelve (12) hours. This test was repeated with a 10 wt% gasoline in dry nitrogen for an additional forty-eight hours. The results of the repeated test, which are shown in FIGURE 17, indicate that power generation by the cell remained stable over this additional period. These results demonstrate that the cell is capable of being operated over a considerable period of time with commercial gasoline.

After the completion of this testing, the anode of the fuel cell again underwent an x-ray diffraction measurement. The x-ray diffraction result showed lines characteristic of copper, ceria and yttria stabilized zirconia. No lines were observed which would be characteristic of sulfur-containing species. This x-ray diffraction data indicates that the sulfur present in a commercial grade of gasoline has no effect on the anode.

### EXAMPLE 9

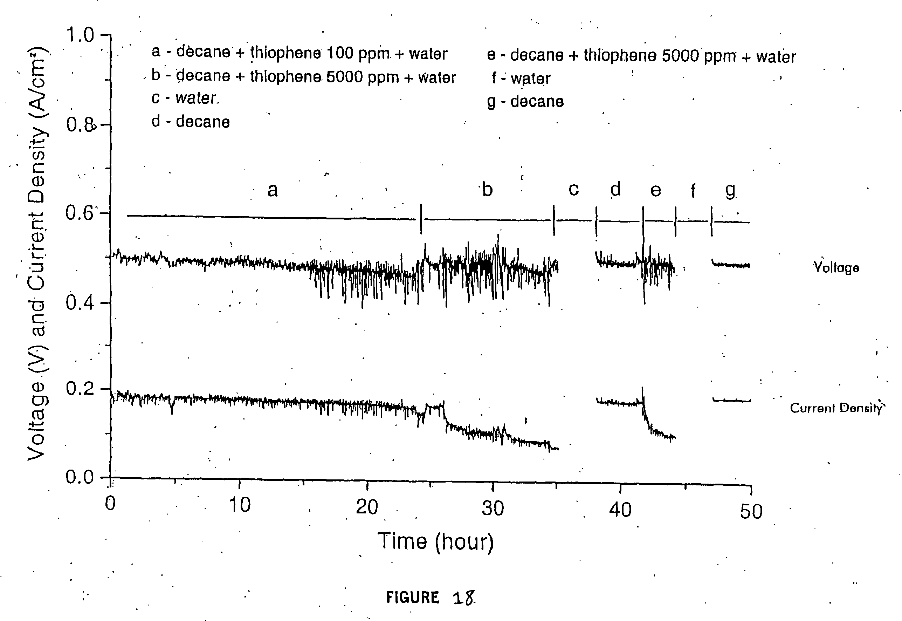

The fuel cell with a copper-ceria-yttria stabilized zirconia was prepared and operated according to EXAMPLE 4 at 700°C with different fuel mixtures. The initial mixture employed was (n-decane containing 100 ppm sulfur (presented as "thiophene")) : steam: nitrogen gas in a ratio of 2:2:2. The next mixture employed was (n-decane containing 5000 ppm sulfur): steam:N₂ in a ratio of 2:2:2. After the mixture was replaced with steam, hydrocarbon mixtures of pure decane and decane containing 5000 ppm sulfur were used. The current density and voltage for the fuel cell for each of these mixtures are shown in FIGURE 18. FIGURE18 indicates that the fuel cell continues to operate after the switch to n-decane containing 5000 ppm sulfur but that the current density decreases with time. **FIGURE** 18 also indicates that fuel cell efficiency is restored after treatment with steam and during use of n-decane fuel.

### EXAMPLE 10

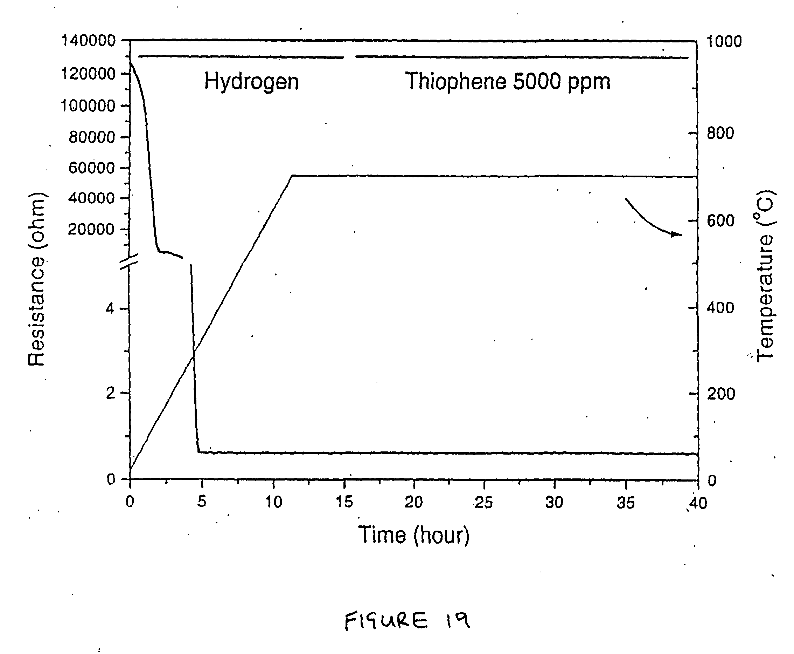

In this EXAMPLE using a freshly prepared cell, with an anode consisting of Cu₂O, CeO₂, and YSZ, the anode was treated by gradually heating to 700°C in hydrogen gas. During this heating step, electrical resistance across the anode was measured in ohms over time and temperature. The results are shown in **FIGURE 19. FIGURE 19** indicates that the resistance of the fuel cell conductor was lowered due to reduction of Cu₂O to metallic Cu. The addition of a sulfur-containing fuel did not affect the resistivity of the Cu-containing anode, demonstrating the inertness of Cu to sulfur under these conditions.

### EXAMPLE 11

In this EXAMPLE, a Ni-YSZ cermet was formed by mixing 40% wt. NiO, 60% wt. YSZ, with graphite pore former, in a typical tape-casting slurry. A second layer with pure YSZ was cast over this, and the two layers were calcined at 1500°C. After heating the resulting ceramic wafer to 700°C in H₂ to reduce the NiO to Ni, the wafer was boiled in HNO₃ to remove Ni. The weight change demonstrates that Ni was completely removed. Next, a 50% YSZ, 50% Sr-doped LaMnO₃ powder was applied to the dense side of the two-layer wafer to form a cathode. Cu(NO₃)₂ and Ce(NO₃)₃ were then impregnated into the porous side of the wafer, heated to decompose the titrate, and reduced + H₂ at 700°C.

### EXAMPLE 12

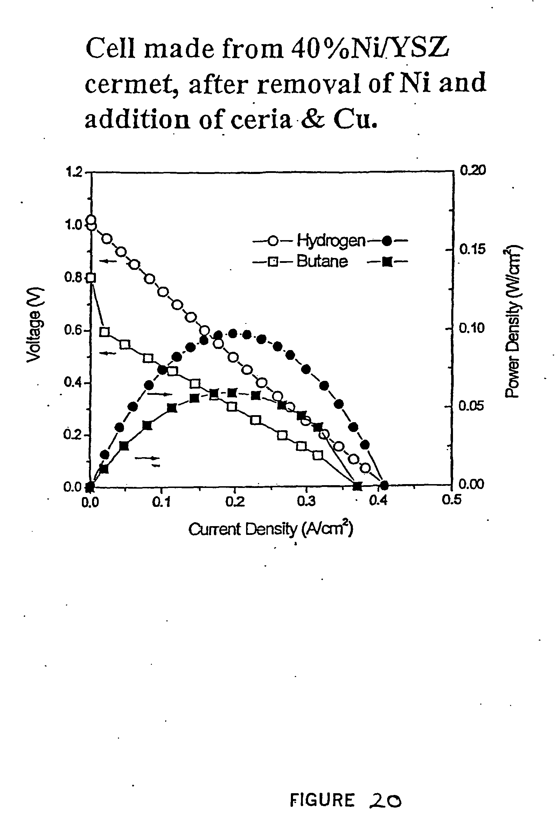

The cell potential as compared to current density curves for the fuel cell described in **EXAMPLE 11** were measured at 700°C in flowing H₂ and flowing butane, with the data shown in **FIGURE** 20.

These results indicate that the performance of the cells with hydrogen and hydrocarbon fuels is comparable to cells prepared in other manners. Furthermore, the performance of the cell in dry butane was stable. Operation of a SOFC with a Ni-based anode is not possible due to rapid coke formation.

### EXAMPLE 13

Five nickel cermets were prepared by tape casting slurries of YSZ and NiO powders in ratios of YSZ to NiO of 70 : 30 (twice), 80 : 20, 90 : 10 and 60 : 40. All of the formulations also contained a graphite pore former.

The metal porosity and weight measurements were taken immediately after calcination of the green tapes in air at 1550°C. Subsequent measurements of porosity and weight were taken after heating the cermets in hydrogen gas (to reduce nickel oxide to nickel) and after leaching with boiling nitric acid. The results for porosity are given in **TABLE 1A.** The results for weight are given in **TABLE 1B**. The data demonstrate that essentially all of the Ni could be removed from the Ni cermet.

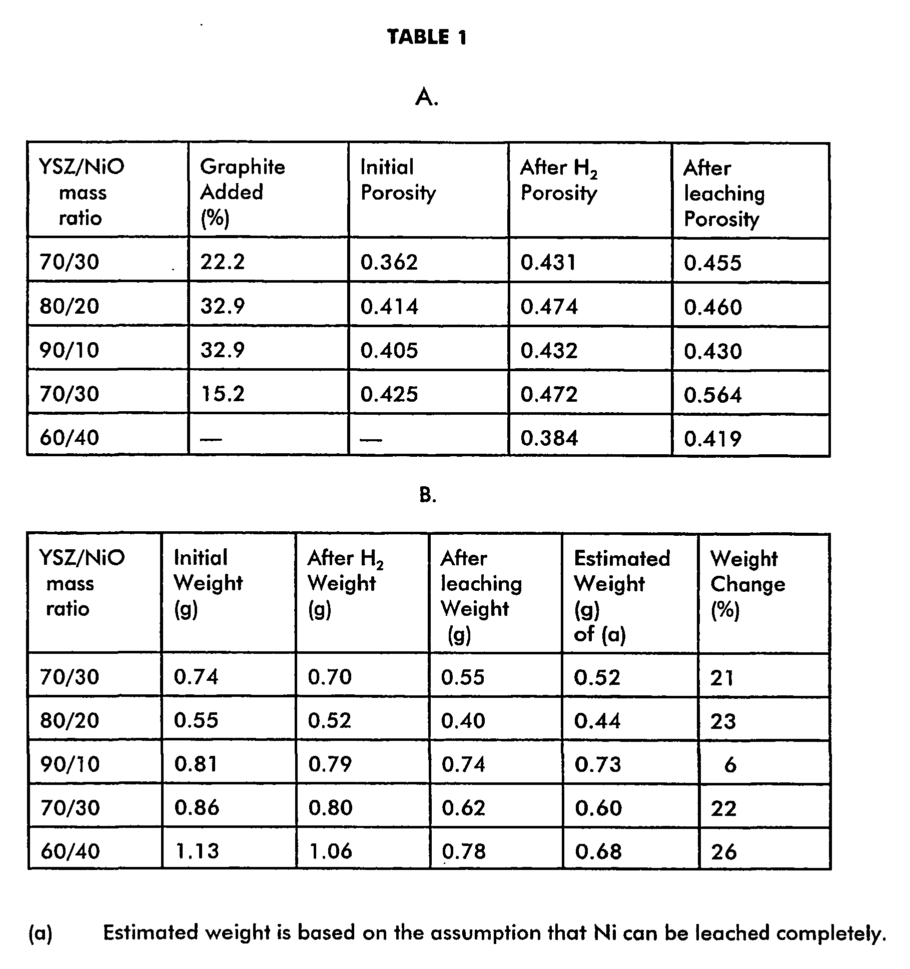

While in the foregoing specification, this invention has been described and exemplified in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. A solid oxide fuel cell comprising
a. a solid electrolyte comprised of an electronic insulator which allows transfer of anions, a composite anode containing at least copper, and a cathode, and
b. an oxygen source;
**characterised in that** at least the solid electrolyte and anode are prepared by forming an assembly comprising a co-sintered porous anode layer and a dense solid electrolyte layer, and then impregnating the porous anode layer with at least copper, the fuel cell being suitable for use with a fuel comprising a sulfur-containing dry hydrocarbon having a sulfur content of from about 1 to about 5000 ppm, and being further **characterized in that** the porosity of the anode is achieved by pore formers that are at least substantially removed so as not to form a component of the finished anode material.

2. The fuel cell according to claim 1, wherein the hydrocarbon is a petroleum distillate.

3. The fuel cell according to claim 2, wherein the petroleum distillate is selected from the group consisting of gasoline, diesel oil, naphtha, Jet Propellant (JP) JP-4, JP-5, JP-8, kerosene, motor oil, natural gas, fuel oil and mixtures thereof.

4. The fuel cell according to claim 3, wherein the petroleum distillate is selected from the group consisting of JP-4, JP-5, JP-8, and mixtures thereof.

5. The fuel cell according to claim 3, wherein the petroleum distillate is selected from the group consisting of naphtha, kerosene, fuel oil, and mixtures thereof.

6. The fuel cell according to claim 3, wherein the petroleum distillate is selected from the group consisting of gasoline, diesel oil, natural gas, and mixtures thereof.

7. The fuel cell according to claim 1, wherein the hydrocarbon comprises an alcohol.

8. The fuel cell according to claim 7, wherein the alcohol is selected from the group consisting of methanol, ethanol, and mixtures thereof.

9. The fuel cell according to claim 1 or claim 2, wherein the hydrocarbon is selected from the group consisting of dry methane, butane, toluene, decane, and mixtures thereof.

10. The fuel cell according to any of claims 1 to 9, wherein the sulfur-containing hydrocarbon fuel has a sulfur content of from about 1 ppm to about 1000 ppm.

11. The fuel cell according to claim 10, wherein the sulfur-containing hydrocarbon fuel has a sulfur content of from about 10 ppm to about 1000 ppm.

12. The fuel cell according to claim 11, wherein the sulfur-containing hydrocarbon fuel has a sulfur content of from about 20 ppm to about 1000 ppm.

13. The fuel cell according to claim 12, wherein the sulfur-containing hydrocarbon fuel has a sulfur content of from about 100 ppm to about 1000 ppm.

14. The fuel cell according to claim 13, wherein the sulfur-containing hydrocarbon fuel has a sulfur content of from about 250 ppm to about 1000 ppm.

15. The fuel cell according to any of claims 1 to 14, wherein the solid electrolyte is an oxide ion conducting material.

16. The fuel cell according to claim 15, wherein the oxide ion conducting material is selected from the group consisting of doped ceria, doped zirconia, and doped lanthanum gallate.

17. The fuel cell according to claim 16, wherein the doped ceria is selected from the group consisting of gadolinium doped ceria, samarium-doped ceria, yttria-doped ceria, and mixtures thereof.

18. The fuel cell according to claim 15, wherein the oxide ion conducting material is yttria-doped zirconia.

19. The fuel cell according to claim 16, wherein the doped zirconia is scandium-doped zirconia.

20. The fuel cell according to any of claims 1 to 19, wherein the composite anode contains ceria and copper.

21. The fuel cell according to claim 20, wherein the porous anode layer is impregnated with ceria.

22. A process of producing electrical energy, comprising:
a. providing a solid oxide fuel cell comprising a solid oxide electrolyte that is an electronic insulator which allows transfer of anions, a composite anode containing at least copper, and a cathode, at least the solid electrolyte and anode being prepared by forming an assembly comprising a co-sintered porous anode layer and a dense solid electrolyte layer, and then impregnating the porous anode layer with at least copper, the fuel cell being further **characterized in that** the porosity of the anode is achieved by pore formers that are at least substantially removed so as not to form a component of the finished anode material;
b. contacting said cathode with an oxygen source; and
c. contacting said anode with a fuel comprising a sulfur-containing hydrocarbon having a sulfur content of from about 10 ppm to about 5000 ppm.

23. The process according to claim 22, wherein the hydrocarbon is a petroleum distillate.

24. The process according to claim 23, wherein the petroleum distillate is selected from the group consisting of gasoline, diesel oil, naphtha, JP-4, JP-5, JP-8, kerosene, motor oil, natural gas, fuel oil, and mixtures thereof.

25. The process according to claim 24, wherein the petroleum distillate is selected from the group consisting of JP-4, JP-5, JP-8, and mixtures thereof.

26. The process according to claim 24, wherein the petroleum distillate is selected from the group consisting of naphtha, kerosene, fuel oil, and mixtures thereof.

27. The process according to claim 24, wherein the petroleum distillate comprises gaso line.

28. The process according to clam 24, wherein the petroleum distillate comprises diesel oil.

29. The process according to claim 22 or claim 23, wherein the hydrocarbon is selected from the group consisting of alcohols, dry methane, butane, toluene, decane, and mixtures thereof.

30. The process according to claim 29, wherein the hydrocarbon comprises an alcohol.

31. The process according to claim 30, wherein the alcohol is selected from the group consisting of methanol, ethanol, and mixtures thereof.

32. The process according to any of claims 22 to 31, wherein the sulfur-containing hydrocarbon has a sulfur content of from about 10 ppm to about 1000 ppm.

33. The process according to claim 22, wherein the composite anode further comprises ceria.

34. The process according to claim 22, wherein the porous anode layer is impregnated with ceria.

35. The use of a fuel cell comprising a solid oxide electrolyte that is an electronic insulator which allows transfer of anions, a composite anode containing at least copper, and a cathode, at least the solid electrolyte and anode being prepared by forming an assembly comprising a co-sintered porous anode layer and a dense solid electrolyte layer, and then impregnating the porous anode layer with at least copper, in a process for producing power according to claim 22.

36. The use of a fuel cell according to claim 36, wherein the composite anode comprises ceria.

37. The use of a fuel cell according to claim 36, wherein the porous anode layer is impregnated with ceria.

## Patentansprüche

1. Festoxidbrennstoffzelle, enthaltend:
a) einen Festelektrolyten, der einen den Transfer von Anionen ermöglichenden elektronischen Isolator, eine wenigstens Kupfer enthaltende Verbundanode und eine Kathode enthält, und
b) eine Sauerstoffquelle,
**dadurch gekennzeichnet, dass** wenigstens der Festelektrolyt und die Anode durch Ausbilden einer eine kogesinterte poröse Anodenschicht und eine dichte Festelektrolytschicht enthaltende Anordnung und dann Imprägnieren der porösen Anodenschicht wenigstens mit Kupfer hergestellt sind, wobei die Brennstoffzelle zur Verwendung mit einem Kraftstoff geeignet ist, der einen Schwefel enthaltenden trockenen Kohlenwasserstoff enthält, der einen Schwefelgehalt von etwa 1 bis etwa 5000 ppm aufweist, und ferner **dadurch gekennzeichnet, dass** die Porosität der Anode durch Porenbildner erreicht wird, die wenigstens im Wesentlichen so entfernt werden, dass sie keine Komponente des fertigen Anodenmaterials bilden.

2. Brennstoffzelle nach Anspruch 1, bei der der Kohlenwasserstoff ein Erdöldestillat ist.

3. Brennstoffzelle nach Anspruch 2, bei der das Erdöldestillat aus der Gruppe ausgewählt ist, die aus Benzin, Dieselöl, Naphtha, Düsentreibstoff (Jet Propellant JP) JP-4, JP-5, JP-8, Kerosin, Motoröl, Erdgas, Heizöl und Mischungen daraus besteht.

4. Brennstoffzelle nach Anspruch 3, bei der das Erdöldestillat aus der Gruppe ausgewählt ist, die aus JP-4, JP-5, JP-8 und Mischungen daraus besteht.

5. Brennstoffzelle nach Anspruch 3, bei der das Erdöldestillat aus der Gruppe ausgewählt ist, die aus Naphtha, Kerosin, Heizöl und Mischungen daraus besteht.

6. Brennstoffzelle nach Anspruch 3, bei der das Erdöldestillat aus der Gruppe ausgewählt ist, die aus Benzin, Dieselöl, Erdgas und Mischungen daraus besteht.

7. Brennstoffzelle nach Anspruch 1, bei der der Kohlenwasserstoff einen Alkohol enthält.

8. Brennstoffzelle nach Anspruch 7, bei der der Alkohol aus der Gruppe ausgewählt ist, die aus Methanol, Ethanol und Mischungen daraus besteht.

9. Brennstoffzelle nach Anspruch 1 oder Anspruch 2, bei der der Kohlenwasserstoff aus der Gruppe ausgewählt ist, die aus trockenem Methan, Butan, Toluol, Decan und Mischungen daraus besteht.

10. Brennstoffzelle nach einem der Ansprüche 1 bis 9, bei der der Schwefel enthaltende Kohlenwasserstoffkraftstoff einen Schwefelgehalt von etwa 1 ppm bis etwa 1000 ppm aufweist.

11. Brennstoffzelle nach Anspruch 10, bei der der Schwefel enthaltende Kohlenwasserstoffkraftstoff einen Schwefelgehalt von etwa 10 ppm bis etwa 1000 ppm aufweist.

12. Brennstoffzelle nach Anspruch 11, bei der der Schwefel enthaltende Kohlenwasserstoffkraftstoff einen Schwefelgehalt von etwa 20 ppm bis etwa 1000 ppm aufweist.

13. Brennstoffzelle nach Anspruch 12, bei der der Schwefel enthaltende Kohlenwasserstoffkraftstoff einen Schwefelgehalt von etwa 100 ppm bis etwa 1000 ppm aufweist.

14. Brennstoffzelle nach Anspruch 13, bei der der Schwefel enthaltende Kohlenwasserstoffkraftstoff einen Schwefelgehalt von etwa 250 ppm bis etwa 1000 ppm aufweist.

15. Brennstoffzelle nach einem der Ansprüche 1 bis 14, bei der Festelektrolyt ein Oxidionen leitendes Material ist.

16. Brennstoffzelle nach Anspruch 15, bei der das Oxidionen leitende Material aus der Gruppe ausgewählt ist, die aus dotiertem Cerdioxid, dotiertem Zirkoniumdioxid und dotiertem Lanthangallat besteht.

17. Brennstoffzelle nach Anspruch 16, bei der das dotierte Cerdioxid aus der Gruppe ausgewählt ist, die aus mit Gadolinium dotiertem Cerdioxid, mit Samarium dotiertem Cerdioxid, mit Yttriumoxid dotiertem Cerdioxid und Mischungen daraus besteht.

18. Brennstoffzelle nach Anspruch 15, bei der das Oxidionen leitende Material mit Yttriumoxid dotiertes Zirkoniumdioxid ist.

19. Brennstoffzelle nach Anspruch 16, bei der das dotierte Zirkoniumdioxid mit Scandium dotiertes Zirkoniumdioxid ist.

20. Brennstoffzelle nach einem der Ansprüche 1 bis 19, bei der die Verbundanode Cerdioxid und Kupfer enthält.

21. Brennstoffzelle nach Anspruch 20, bei der die poröse Anodenschicht mit Cerdioxid imprägniert ist.

22. Verfahren zur Erzeugung von elektrischer Energie, umfassend:
a) Bereitstellen einer Festoxidbrennstoffzelle, enthaltend einen Festelektrolyten, der ein den Transfer von Anionen ermöglichender elektronischer Isolator ist, eine wenigstens Kupfer enthaltende Verbundanode und eine Kathode, wobei wenigstens der Festelektrolyt und die Anode durch Ausbilden einer eine kogesinterte poröse Anodenschicht und eine dichte Festelektrolytschicht enthaltende Anordnung und dann Imprägnieren der porösen Anodenschicht wenigstens mit Kupfer hergestellt sind, wobei die Brennstoffzelle ferner **dadurch gekennzeichnet ist, dass** die Porosität der Anode durch Porenbildner erreicht wird, die wenigstens im Wesentlichen so entfernt werden, dass sie keine Komponente des fertigen Anodenmaterials bilden,
b) Kontaktieren der Kathode mit einer Sauerstoffquelle und
c) Kontaktieren der Anode mit einem Kraftstoff, der einen Schwefel enthaltenden Kohlenwasserstoff enthält, der einen Schwefelgehalt von etwa 10 ppm bis etwa 5000 ppm aufweist.

23. Verfahren nach Anspruch 22, bei dem der Kohlenwasserstoff ein Erdöldestillat ist.

24. Verfahren nach Anspruch 23, bei dem das Erdöldestillat aus der Gruppe ausgewählt ist, die aus Benzin, Dieselöl, Naphtha, JP-4, JP-5, JP-8, Kerosin, Motoröl, Erdgas, Heizöl und Mischungen daraus besteht.

25. Verfahren nach Anspruch 24, bei dem das Erdöldestillat aus der Gruppe ausgewählt ist, die aus JP-4, JP-5, JP-8 und Mischungen daraus besteht.

26. Verfahren nach Anspruch 24, bei dem das Erdöldestillat aus der Gruppe ausgewählt ist, die aus Naphtha, Kerosin, Heizöl und Mischungen daraus besteht.

27. Verfahren nach Anspruch 24, bei dem das Erdöldestillat Benzin umfasst.

28. Verfahren nach Anspruch 24, bei dem das Erdöldestillat Dieselöl umfasst.

29. Verfahren nach Anspruch 22 oder Anspruch 23, bei dem der Kohlenwasserstoff aus der Gruppe ausgewählt ist, die aus Alkoholen, trockenem Methan, Butan, Toluol, Decan und Mischungen daraus besteht.

30. Verfahren nach Anspruch 29, bei dem der Kohlenwasserstoff einen Alkohol enthält.

31. Verfahren nach Anspruch 30, bei dem der Alkohol aus der Gruppe ausgewählt ist, die aus Methanol, Ethanol und Mischungen daraus besteht.

32. Verfahren nach einem der Ansprüche 22 bis 31, bei dem der Schwefel enthaltende Kohlenwasserstoff einen Schwefelgehalt von etwa 10 ppm bis etwa 1000 ppm aufweist.

33. Verfahren nach Anspruch 22, bei dem die Verbundanode ferner Cerdioxid enthält.

34. Verfahren nach Anspruch 22, bei dem die poröse Anodenschicht mit Cerdioxid imprägniert ist.

35. Verwendung einer Brennstoffzelle, enthaltend einen Festoxidelektrolyten, der ein den Transfer von Anionen ermöglichender elektronischer Isolator ist, eine wenigstens Kupfer enthaltende Verbundanode und eine Kathode, wobei wenigstens der Festelektrolyt und die Anode durch Ausbilden einer eine kogesinterte poröse Anodenschicht und eine dichte Festelektrolytschicht enthaltende Anordnung und dann Imprägnieren der porösen Anodenschicht wenigstens mit Kupfer hergestellt sind, bei einem Verfahren zur Erzeugung von Strom nach Anspruch 22.

36. Verwendung einer Brennstoffzelle nach Anspruch 36, bei der die Verbundanode Cerdioxid enthält.

37. Verwendung einer Brennstoffzelle nach Anspruch 36, bei der die poröse Anodenschicht mit Cerdioxid imprägniert ist.

## Revendications

**1.** Pile à combustible à oxyde solide, comprenant :
a. un électrolyte solide composé d'un isolant électronique qui autorise le transfert des anions, une anode composite contenant au moins du cuivre et une cathode, et
b. une source d'oxygène ;
**caractérisée en ce qu'**au moins l'électrolyte solide et l'anode sont préparés en formant un assemblage comprenant une couche poreuse d'anode et une couche dense d'électrolyte solide co-frittées, puis en imprégnant la couche poreuse d'anode avec au moins du cuivre, la pile à combustible étant appropriée pour être utilisée avec un combustible comprenant un hydrocarbure sec contenant du soufre présentant une teneur en soufre d'environ 1 ppm à environ 5 000 ppm, et étant en outre **caractérisée en ce que** la porosité de l'anode est obtenue par des formeurs de pores qui sont au moins sensiblement éliminés afin de ne pas former un composant du matériau de l'anode finie.

**2.** Pile à combustible selon la revendication 1, dans laquelle l'hydrocarbure est un distillat de pétrole.

**3.** Pile à combustible selon la revendication 2, dans laquelle le distillat de pétrole est choisi dans le groupe constitué par l'essence, le diesel, le naphta, le carburant pour moteur à réaction (JP) JP-4, JP-5, JP-8, le kérosène, une huile pour moteur, le gaz naturel, le mazout et leurs mélanges.

**4.** Pile à combustible selon la revendication 3, dans laquelle le distillat de pétrole est choisi dans le groupe constitué par le JP-4, le JP-5, le JP-8 et leurs mélanges.

**5.** Pile à combustible selon la revendication 3, dans laquelle le distillat de pétrole est choisi dans le groupe constitué par le naphta, le kérosène, le mazout et leurs mélanges.

**6.** Pile à combustible selon la revendication 3, dans laquelle le distillat de pétrole est choisi dans le groupe constitué par l'essence, le diesel, le gaz naturel et leurs mélanges.

**7.** Pile à combustible selon la revendication 1, dans laquelle l'hydrocarbure comprend un alcool.

**8.** Pile à combustible selon la revendication 7, dans laquelle l'alcool est choisi dans le groupe constitué par le méthanol, l'éthanol et leurs mélanges.

**9.** Pile à combustible selon la revendication 1 ou la revendication 2, dans laquelle l'hydrocarbure est choisi dans le groupe constitué par le méthane sec, le butane, le toluène, le décane et leurs mélanges.

**10.** Pile à combustible selon l'une quelconque des revendications 1 à 9, dans laquelle le combustible hydrocarboné contenant du soufre présente une teneur en soufre d'environ 1 ppm à environ 1 000 ppm.

**11.** Pile à combustible selon la revendication 10, dans laquelle le combustible hydrocarboné contenant du soufre présente une teneur en soufre d'environ 10 ppm à environ 1 000 ppm.

**12.** Pile à combustible selon la revendication 11, dans laquelle le combustible hydrocarboné contenant du soufre présente une teneur en soufre d'environ 20 ppm à environ 1 000 ppm.

**13.** Pile à combustible selon la revendication 12, dans laquelle le combustible hydrocarboné contenant du soufre présente une teneur en soufre d'environ 100 ppm à environ 1 000 ppm.

**14.** Pile à combustible selon la revendication 13, dans laquelle le combustible hydrocarboné contenant du soufre présente une teneur en soufre d'environ 250 ppm à environ 1 000 ppm.

**15.** Pile à combustible selon l'une quelconque des revendications 1 à 14, dans laquelle l'électrolyte solide est un matériau conducteur d'ions oxydes.

**16.** Pile à combustible selon la revendication 15, dans laquelle le matériau conducteur d'ions oxydes est choisi dans le groupe constitué par le cérium dopé, la zircone dopée et le gallate de lanthane dopé.

**17.** Pile à combustible selon la revendication 16, dans laquelle le cérium dopé est choisi dans le groupe constitué par l'oxyde de cérium dopé au gadolinium, l'oxyde de cérium dopé au samarium, l'oxyde de cérium dopé à l'oxyde d'yttrium et leurs mélanges.

**18.** Pile à combustible selon la revendication 15, dans laquelle le matériau conducteur d'ions oxyde est la zircone dopée à l'oxyde d'yttrium.

**19.** Pile à combustible selon la revendication 16, dans laquelle la zircone dopée est la zircone dopée au scandium.

**20.** Pile à combustible selon l'une quelconque des revendications 1 à 19, dans laquelle l'anode composite contient de l'oxyde de cérium et du cuivre.

**21.** Pile à combustible selon la revendication 20, dans laquelle la couche poreuse d'anode est imprégnée avec du cérium.

**22.** Procédé de production d'énergie électrique, comprenant :
a. la fourniture d'une pile à combustible à oxyde solide comprenant un électrolyte à base d'oxyde solide qui est un isolant électronique qui autorise le transfert des anions, une anode composite contenant au moins du cuivre et une cathode, au moins l'électrolyte solide et l'anode sont préparés en formant un assemblage comprenant une couche poreuse d'anode et une couche dense d'électrolyte solide co-frittées, puis en imprégnant la couche poreuse d'anode avec au moins du cuivre, la pile à combustible étant en outre **caractérisée en ce que** la porosité de l'anode est obtenue par des formeurs de pores qui sont au moins sensiblement éliminés afin de ne pas former un composant du matériau de l'anode finie ;
b. le contact de ladite cathode avec une source d'oxygène ; et
c. le contact de ladite anode avec un combustible comprenant un hydrocarbure contenant du soufre présentant une teneur en soufre d'environ 10 ppm à environ 5 000 ppm.

**23.** Procédé selon la revendication 22, dans lequel l'hydrocarbure est un distillat de pétrole.

**24.** Procédé selon la revendication 23, dans lequel le distillat de pétrole est choisi dans le groupe constitué par l'essence, le diesel, le naphta, le JP-4, le JP-5, le JP-8, le kérosène, une huile pour moteur, le gaz naturel, le mazout et leurs mélanges.

**25.** Procédé selon la revendication 24, dans lequel le distillat de pétrole est choisi dans le groupe constitué par le JP-4, le JP-5, le JP-8 et leurs mélanges.

**26.** Procédé selon la revendication 24, dans lequel le distillat de pétrole est choisi dans le groupe constitué par le naphta, le kérosène, le mazout et leurs mélanges.

**27.** Procédé selon la revendication 24, dans lequel le distillat de pétrole comprend l'essence.

**28.** Procédé selon la revendication 24, dans lequel le distillat de pétrole comprend le diesel.

**29.** Procédé selon la revendication 22 ou la revendication 23, dans lequel l'hydrocarbure est choisi dans le groupe constitué par les alcools, le méthane sec, le butane, le toluène, le décane et leurs mélanges.

**30.** Procédé selon la revendication 29, dans lequel l'hydrocarbure comprend un alcool.

**31.** Procédé selon la revendication 30, dans lequel l'alcool est choisi dans le groupe constitué par le méthanol, l'éthanol et leurs mélanges.

**32.** Procédé selon l'une quelconque des revendications 22 à 31, dans lequel l'hydrocarbure contenant du soufre présente une teneur en soufre d'environ 10 ppm à environ 1 000 ppm.

**33.** Procédé selon la revendication 22, dans lequel l'anode composite comprend en outre du cérium.

**34.** Procédé selon la revendication 22, dans lequel la couche poreuse d'anode est imprégnée avec du cérium.

**35.** Utilisation d'une pile à combustible comprenant un électrolyte à base d'oxyde solide qui est un isolant électronique qui autorise le transfert des anions, une anode composite contenant au moins du cuivre et une cathode, et au moins l'électrolyte solide et l'anode sont préparés en formant un assemblage comprenant une couche poreuse d'anode et une couche dense d'électrolyte solide co-frittées, puis en imprégnant la couche poreuse d'anode avec au moins du cuivre, dans un procédé de production d'énergie selon la revendication 22.

**36.** Utilisation d'une pile à combustible selon la revendication 36, dans laquelle l'anode composite comprend du cérium.

**37.** Utilisation d'une pile à combustible selon la revendication 36, dans laquelle la couche poreuse d'anode est imprégnée avec du cérium.
